# EUROPEAN PATENT SPECIFICATION

(11) **EP 3 247 037 B1**
(45) Date of publication and mention of the grant of the patent: **29.06.2022**
(21) Application number: 16170253.5
(22) Date of filing: 19.05.2016
(51) Int. Cl.: H02P 9/00, H02P 9/02, H02P 27/06, H02J 3/18

(54) **A TURBOGENERATOR SET**
TURBOGENERATORANLAGE
ENSEMBLE TURBOGÉNÉRATEUR

(43) Date of publication of application: 22.11.2017
(73) Proprietor: General Electric Technology GmbH, 5400 Baden (CH)
(72) Inventor: DEURINGER, Michael Anton, 5400 Baden (CH); SCHÄFER, René Wilhelm, 5400 Baden (CH)
(74) Representative: Novagraaf Group

(56) References cited:
- DE-A1- 3 305 225
- US-A- 5 649 416
- US-A1- 2012 306 458
- US-A1- 2014 265 972
- US-A1- 2015 123 623
- US-B1- 8 963 350

## Description

### TECHNICAL FIELD

The present disclosure relates to a turbogenerator set driven by a turbine with at least one load commutated inverter connected to the turbogenerator and a synchronous machine to supply power to an electric grid.

### BACKGROUND

Turbines are commonly powered by energy carriers as gas and/or steam to produce a mechanical torque to drive a downstream generator. A generator connected to a turbine for high power generation is usually referred to as a turbogenerator. The term turbogenerator is used in this context in this disclosure. Generally, turbogenerators are operated with specific rotor speeds specified in rotations per minute (rpm). The rotor speed depends on the pole numbers and the frequency of the grid connected to the turbogenerator. Usual rotor speeds are 3.000rpm for 50Hz voltage generation and 3.600rpm for 60Hz voltage generation. The operation of turbines with lower, non-synchronous speeds of the rotor can be advantageous in terms of power output, the operation of the turbine and the whole connected energy conversion system can be made more efficient then. Turbogenerators with high power output can be connected to static frequency converters to adjust the generated frequency to the electric grid to which the power is supplied. DE 3305225 A1 describes a power station with at least one generator with a converter which consists of two bridge circuits. US 2012/306458 A1 describes a conversion of a synchronous generator to a synchronous condenser to generate or absorb reactive power. US 8963350 B1 describes a steam turbine driven electric power plant with a main steam turbine, a synchronous electric machine coupled to another steam turbine with a smaller rating than the main turbine, which during an island mode decouples the main turbine and operates the other steam turbine. US 2015/123623 A1 describes an electric power generation plant with two synchronous machines and a source of electrical power such that one machine can be operated as a generator while another machine is operated as condenser. With the design of lower power turbogenerators the provision of static frequency converters is too costly. These are commonly connected to a higher speed turbine via a gear box.

### SUMMARY

It is an object of the invention to provide a solution to connect a turbogenerator to an electric grid in a cost-saving manner.

This object is solved with the features of a turbogenerator set according to the independent claim.

Further examples of the invention are described in the dependent claims.

According to an example the load commutated inverter is designed with two 3-phase full bridges of thyristors, whereby a first bridge is arranged at the side of the turbogenerator and a second bridge is arranged at the side of the electric grid.

In another example the turbine is a gas turbine and the synchronous electric machine is a generator driven by a steam turbine in a combined gas and steam plant.

In a further example the at least one load commutated inverter is connectable to the electric grid by disconnectors as a function of the load supplied to the electric grid.

In another example the turbogenerator is a synchronous machine with an integer multiple of three-phase winding systems.

In a further example the speed of the turbine driving the turbogenerator is variable depending on the operating conditions and load requirements.

In another example the turbine is operated with 50Hz and the electric grid has a frequency of 60Hz or the turbine is operated with 60Hz and the electric grid has a frequency of 50Hz. Thus, the turbogenerator set achieves a flexible operation mode.

In a further example the turbine is driven with a non-synchronous speed.

In another example the at least one auxiliary load is connected via an auxiliary transformer and isolators to the at least one load commutated inverter.

### BRIEF DESCRIPTION OF THE DRAWINGS

Further characteristics and advantages will be more apparent from the description of a preferred but non-exclusive embodiment of the turbogenerator set, illustrated by way of non-limiting example in the accompanying drawings, in which:
- Fig. 1: shows a block diagram of a turbogenerator set according to an example of the invention with a turbine, a turbogenerator connected to two load commutated inverters via filter and overvoltage protection, and the load commutated inverters are connected to an electric grid via filters, overvoltage protection, and a three-winding step-up transformer;
- Fig. 2: shows a block diagram of an alternative grid transformer arrangement to connect the load commutated inverters to the electric grid;
- Fig. 3: shows a block diagram of an additional circuit connected in parallel to the circuit according to Fig. 1, comprising a synchronous electric machine driven by a steam turbine and in addition an auxiliary transformer feeding auxiliary loads connected to the grid transformer via isolators.

### DETAILED DESCRIPTION OF EXEMPLARY EMBODIMENTS

With reference to the figures, these show a turbogenerator set according to an example of the invention and a step-up transformer alternative to conventional step-up transformers suitable for the example.

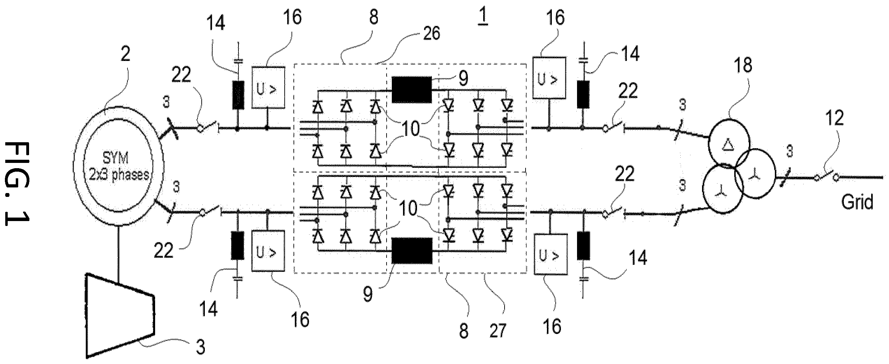

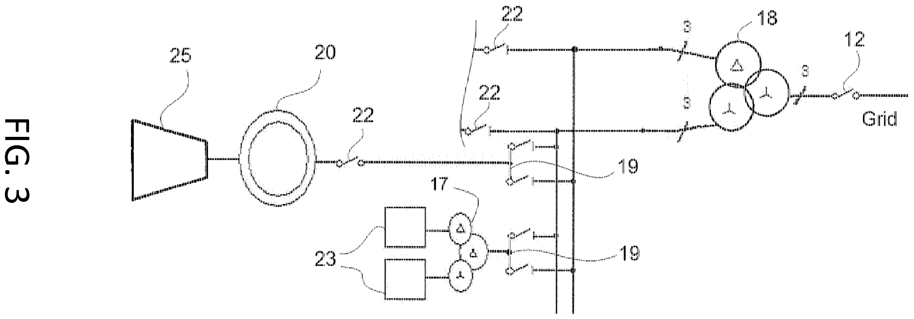

Fig. 1 shows a block diagram of a part of a turbogenerator set 1 according to an example of the invention. The second part of the turbogenerator set 1 is shown in Fig. 3. At the bottom left a turbine 3 is connected to a turbogenerator 2 to drive the turbogenerator 2. The turbine 3 can be operated commonly by oil, gas, or steam, here the turbine 3 is a gas turbine with variable rotation speed. The turbogenerator 2 is designed as a synchronous machine which generates power with two times three phases. In Fig. 1 the two outputs are illustrated by two connections at the turbogenerator 2 with each three phases. Each of the two outputs are connected via breakers or disconnectors 22 to a filter circuit or filter 14 to reduce voltage, current, and torque harmonics at the turbogenerator side. The filters 14 are illustrated by an electric circuit formed by a capacitor and an inductance. The filters 14 are optional depending on harmonic requirements and the design of the turbogenerator 2. At each output with three phases after the filter 14 an overvoltage protection circuit 16 is provided. Next, each of a three generator phase system is connected to a load commutated inverter 8. The turbogenerator set 1 can comprise only one or a different number of load commutated inverters 8. Here, the load commutated inverters 8 each comprise for each phase two thyristors 10 on generator side and on electric grid side, connected via an inductance 9, as can be seen in Fig. 1. A first bridge 26 of the load commutated inverter 8 is arranged at the left generator side, a second bridge 27 is arranged at the right grid side. Each load commutated inverter 8 contains twelve thyristors 10 thus. At the output of each load commutated inverter 8 another overvoltage protection circuit or overvoltage protection 16 is connected. After each overvoltage protection 16 another filter circuit or filter 14 is connected for both three phase systems. The outputs of each filter 14 are connected to a step-up transformer 18 via a disconnector 22. The output of the step-up transformer 18 is connected via a circuit breaker 12 to the electric grid. The grid transformer 18 in Fig. 1 is a three-winding transformer comprising a delta connection and a star connection at low voltage side. The load commutated inverters 8 (LCIs) mainly have the function to adjust the power generated by the turbogenerator 2 in frequency and phase to the electric grid. In one operation mode during start-up the LCIs 8 operate to drive the turbogenerator 2 as a motor to accelerate the turbine 3 to ignition speed and to further support the acceleration of the turbine 3. In the common operation mode the LCIs 8 transfer the generated power to the electric grid. Conventionally, a control device of the turbine 3 measures the frequency of the grid and can automatically adjust the power to support the grid frequency. In conventional power plants this grid frequency is equal to a synchronous speed. When an excess of generated power is available to the grid, the turbogenerator set 1 may run at part load. Thus, when for various reasons less power is needed at the electric grid one of the LCIs 8 can be switched off by opening one disconnector 22 to improve efficiency. This switching can be triggered by changing the load set-point by the operator of the turbine 3. For example, when the load set-point is below fifty percent of the grid power, one of the two bridges of the LCIs 8, the upper or lower bridge in Fig. 1, can be switched off. The remaining bridge then supplies the full power to the grid. This partial operation of only one LCI 8 in this example, or in general the switch off of a number of LCIs 8 from the electric grid in case of several LCIs 8, reduces losses in the LCIs 8. When the load of the electric grid exceeds a threshold the respective disconnector 22 is closed again. This leads to an increased power transfer from the turbogenerator set 1 to the electric grid. It is to be understood that also a higher number of LCIs 8 can be switched accordingly. The LCIs 8 are connectable to the electric grid by the disconnectors 22 as a function of the load supplied to the electric grid then. With a number of LCIs 8 switched to or from the turbogenerator set 1 adapted to the load of the electric grid, also the losses of the turbogenerator set 1 are reduced.

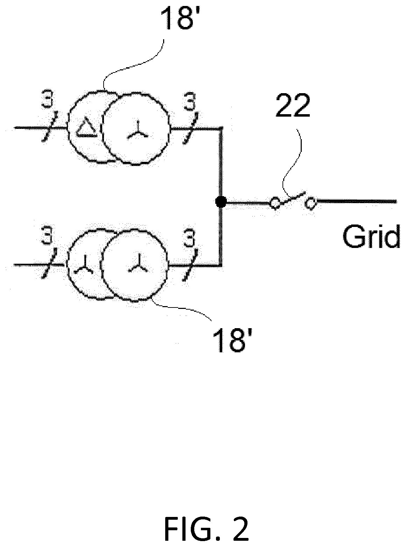

Fig. 2 shows a block diagram of an alternative grid transformer 18' to connect the load commutated inverters 8 as described above to the electric grid. Here, again two times three phases come from the two LCIs 8 via the filter 14 and the overvoltage protection 16 in each path. The grid transformer 18' has a different circuitry than conventional unit step-up transformers used in power plants. Shown are two independent three-phase transformers, two-winding transformers, one in delta-star connection, the other in delta-delta connection. The function of the grid transformer 18' to adapt the voltages to the electric grid is similar to the solution in Fig. 1.

Fig. 3 shows a block diagram of an additional circuit connected in parallel with the circuit from Fig. 1 with the two load commutated inverters 8 as described above. The two connected circuits of Fig. 1 and Fig. 3 form the turbogenerator set 1 according to the described example. The circuitry in Fig. 1 left of the disconnectors 22 covering the main parts of the turbogenerator set 1 is not shown in Fig. 3. The additional circuit under Fig. 3 comprises a steam turbine 25 which drives a synchronous electric machine 20. These components have the function to support the turbogenerator 2 to supply reactive power to the electric grid. Nevertheless, also the synchronous electric machine 20 driven by the steam turbine 25 of Fig. 3 supplies active power to the electric grid. Commonly, the general design of several electric machines driven each by individual turbines is called a multi-shaft system. In addition the synchronous electric machine 20 supplies additional reactive power to the electric grid as required. This measure is important as the turbogenerator set 1 with the LCIs 8 cannot transfer reactive power to the electric grid. The synchronous electric machine 20 further provides the necessary reactive power to commutate the grid side parts of the LCIs 8 in case this power is not provided by the electric grid. This case occurs particularly in island grids when no or few further generators feed the electric grid. The steam turbine 25 and the synchronous electric machine 20 are connected via an isolator 19 to the circuitry described in Fig. 1 to form the complete turbogenerator set 1. Between the synchronous electric machine 20 and the isolator 19 another disconnector 22 is arranged. Via the isolator 19 the combination of the steam turbine 25 with the synchronous electric machine 20 can be switched on and off from and to the turbogenerator 2 and the electric grid, respectively. The synchronous electric machine 20 if in operation, can further supply power to the LCIs 8 to allow the LCIs 8 to operate in start-up mode for the turbine 3. This mode of the LCIs 8 initiates the turbogenerator 2 to change from generator to motor mode to run up the turbine 3. A further option according to an example is shown below the electrical branch with the synchronous electric machine 20. In the electrical branch at the bottom of Fig. 3 auxiliary loads 23, e.g. pumps, excitation systems, are connected in parallel to the turbogenerator set 1 and also to the electric grid, as shown. The auxiliary loads 23 are connected via an auxiliary transformer 17 to the low voltage bus of the grid transformer 18. The described turbogenerator set 1 is realized in this example with a synchronous machine driven by a gas turbine, the turbine 3, and another synchronous machine driven by the steam turbine 25. The disclosed turbogenerator set 1 is especially useful with a low power design where other converter types are too expensive.

While the invention has been described in detail with reference to exemplary embodiments thereof, it will be apparent to one skilled in the art that various changes can be made without departing from the scope of the claimed invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated.

### REFERENCE NUMBERS

- 1: turbogenerator set
- 2: turbogenerator
- 3: turbine
- 8: load commutated inverter (LCI)
- 9: inductance
- 10: thyristor
- 12: circuit breaker
- 14: filter
- 16: overvoltage protection
- 17: auxiliary transformer
- 18, 18': step-up transformer to electric grid
- 19: isolator
- 20: synchronous electric machine
- 22: disconnector
- 23: auxiliary load
- 25: steam turbine
- 26: first bridge
- 27: second bridge

## Claims

1. A turbogenerator set (1) comprising a turbogenerator (2), a turbine (3) driving the turbogenerator (2) and at least one load commutated inverter (8) connected to the turbogenerator (2) and connectable to an electric grid to supply active power to the electric grid, whereas the load commutated inverter (8) comprises a multitude of thyristors (10), **characterized in that** the at least one load commutated inverter (8) is connected to the turbogenerator (2) via circuit breakers (22) and the turbogenerator set (1) further comprises a synchronous electric machine (20) to supply active and reactive power to the electric grid, whereas the turbogenerator (2) and the synchronous electric machine (20) both are connected to the electric grid in parallel wherein the turbine (3) is a gas turbine and the synchronous electric machine (20) is a generator driven by a steam turbine (25) in a combined gas and steam plant.

2. The turbogenerator set (1) according to claim 1, **characterized in that** the load commutated inverter (8) is designed with two 3-phase full bridges of thyristors (10), whereby a first bridge (26) is arranged at the side of the turbogenerator (2) and a second bridge (27) is arranged at the side of the electric grid.

3. The turbogenerator set (1) according to one of the foregoing claims, **characterized in that** the at least one load commutated inverter (8) is connectable to the electric grid by disconnectors (22) as a function of the load supplied to the electric grid.

4. The turbogenerator set (1) according to one of the foregoing claims, **characterized in that** the turbogenerator (2) is a synchronous machine with an integer multiple of three-phase winding systems.

5. The turbogenerator set (1) according to one of the foregoing claims, **characterized in that** the speed of the turbine (3) driving the turbogenerator (2) is variable depending on the operating conditions and load requirements.

6. The turbogenerator set (1) according to one of the foregoing claims, **characterized in that** the turbine (3) is operated with 50Hz and the electric grid has a frequency of 60Hz or the turbine (3) is operated with 60Hz and the electric grid has a frequency of 50Hz.

7. The turbogenerator set (1) according to one of the foregoing claims, **characterized in that** the turbine (3) is driven with a non-synchronous speed.

8. The turbogenerator set (1) according to one of the foregoing claims, **characterized in that** at least one auxiliary load (23) is connected via an auxiliary transformer (17) and isolators (19) to the at least one load commutated inverter (8).

9. The turbogenerator set (1) according to one of the foregoing claims, wherein the synchronous electric machine (20) is driven by a steam turbine (25) and the turbine (3) driving the turbogenerator (2) are provided as a multi-shaft system.

## Patentansprüche

1. Turbogeneratoranlage (1) umfassend einen Turbogenerator (2), eine Turbine (3), die den Turbogenerator (2) antreibt, und mindestens einen Lastumschalter (8), der mit dem Turbogenerator (2) verbunden ist und mit einem Stromnetz verbindbar ist, um das Stromnetz mit Wirkleistung zu versorgen, wobei der Lastumschalter (8) eine Vielzahl von Thyristoren (10) umfasst, **dadurch gekennzeichnet, dass** der mindestens eine Lastumschalter (8) über Leistungsschalter (22) mit dem Turbogenerator (2) verbunden ist und die Turbogeneratoranlage (1) ferner eine synchrone elektrische Maschine (20) zur Versorgung des Stromnetzes mit Wirk- und Blindleistung umfasst, wobei der Turbogenerator (2) und die synchrone elektrische Maschine (20) beide parallel mit dem Stromnetz verbunden sind, wobei die Turbine (3) eine Gasturbine ist und die synchrone elektrische Maschine (20) ein Generator ist, der von einer Dampfturbine (25) in einer kombinierten Gas- und Dampfanlage angetrieben wird.

2. Turbogeneratoranlage (1) nach Anspruch 1, **dadurch gekennzeichnet, dass** der Lastumschalter (8) mit zwei 3-phasigen Vollbrücken der Thyristoren (10) ausgelegt ist, wobei eine erste Brücke (26) auf der Seite des Turbogenerators (2) angeordnet ist und eine zweite Brücke (27) auf der Seite des Stromnetzes angeordnet ist.

3. Turbogeneratoranlage (1) nach einem der vorstehenden Ansprüche, **dadurch gekennzeichnet, dass** der mindestens eine Lastumschalter (8) über Trennschalter (22) mit dem Stromnetz verbindbar ist in Abhängigkeit von der Last, die dem Stromnetz zugeführt wird.

4. Turbogeneratoranlage (1) nach einem der vorstehenden Ansprüche, **dadurch gekennzeichnet, dass** der Turbogenerator (2) eine synchrone Maschine mit einem ganzzahligen Vielfachen von dreiphasigen Wicklungssystemen ist.

5. Turbogeneratoranlage (1) nach einem der vorstehenden Ansprüche, **dadurch gekennzeichnet, dass** die Drehzahl der Turbine (3), die den Turbogenerator (2) antreibt, je nach den Betriebsbedingungen und Lastanforderungen variabel ist.

6. Turbogeneratoranlage (1) nach einem der vorstehenden Ansprüche, **dadurch gekennzeichnet, dass** die Turbine (3) mit 50 Hz betrieben wird und das Stromnetz eine Frequenz von 60 Hz aufweist oder die Turbine (3) mit 60 Hz betrieben wird und das Stromnetz eine Frequenz von 50 Hz aufweist.

7. Turbogeneratoranlage (1) nach einem der vorstehenden Ansprüche, **dadurch gekennzeichnet, dass** die Turbine (3) mit einer nicht synchronen Drehzahl angetrieben wird.

8. Turbogeneratoranlage (1) nach einem der vorstehenden Ansprüche, **dadurch gekennzeichnet, dass** mindestens eine Hilfslast (23) über einen Hilfstransformator (17) und Isolatoren (19) mit dem mindestens einen Lastumschalter (8) verbunden ist.

9. Turbogeneratoranlage (1) nach einem der vorstehenden Ansprüche, wobei die synchrone elektrische Maschine (20) durch eine Dampfturbine (25) angetrieben wird und die Turbine (3), die den Turbogenerator (2) antreibt, als Mehrwellensystem bereitgestellt werden.

## Revendications

1. Ensemble turbogénérateur (1) comprenant un turbogénérateur (2), une turbine (3) entraînant le turbogénérateur (2) et au moins un onduleur à commutation de charge (8) connecté au turbogénérateur (2) et pouvant être connecté à un réseau électrique pour alimenter de la puissance active au réseau électrique, alors que l'onduleur à commutation de charge (8) comprend une multitude de thyristors (10), **caractérisé en ce que** l'au moins un onduleur à commutation de charge (8) est connecté au turbogénérateur (2) par l'intermédiaire de disjoncteurs (22) et l'ensemble turbogénérateur (1) comprend en outre une machine électrique synchrone (20) pour alimenter de la puissance active et réactive au réseau électrique, alors que le turbogénérateur (2) et la machine électrique synchrone (20) sont l'un et l'autre connectés au réseau électrique en parallèle dans lequel la turbine (3) est une turbine à gaz et la machine électrique synchrone (20) est un générateur entraîné par une turbine à vapeur (25) dans une centrale combinée à gaz et vapeur.

2. Ensemble turbogénérateur (1) selon la revendication 1, **caractérisé en ce que** l'onduleur à commutation de charge (8) est conçu avec deux ponts complets triphasés de thyristors (10), moyennant quoi un premier pont (26) est agencé au niveau du côté du turbogénérateur (2) et un deuxième pont (27) est agencé au niveau du côté du réseau électrique.

3. Ensemble turbogénérateur (1) selon l'une des revendications précédentes, **caractérisé en ce que** l'au moins un onduleur à commutation de charge (8) peut être connecté au réseau électrique par des sectionneurs (22) en fonction de la charge alimentée au réseau électrique.

4. Ensemble turbogénérateur (1) selon l'une des revendications précédentes, **caractérisé en ce que** le turbogénérateur (2) est une machine synchrone avec un multiple entier de systèmes d'enroulement triphasés.

5. Ensemble turbogénérateur (1) selon l'une des revendications précédentes, **caractérisé en ce que** la vitesse de la turbine (3) entraînant le turbogénérateur (2) est variable en fonction des conditions de fonctionnement et des exigences de charge.

6. Ensemble turbogénérateur (1) selon l'une des revendications précédentes, **caractérisé en ce que** la turbine (3) est mise en fonctionnement avec 50 Hz et le réseau électrique a une fréquence de 60 Hz ou la turbine (3) est mise en fonctionnement avec 60 Hz et le réseau électrique a une fréquence de 50 Hz.

7. Ensemble turbogénérateur (1) selon l'une des revendications précédentes, **caractérisé en ce que** la turbine (3) est entraînée avec une vitesse non synchrone.

8. Ensemble turbogénérateur (1) selon l'une des revendications précédentes, **caractérisé en ce qu'**au moins une charge auxiliaire (23) est connectée par l'intermédiaire d'un transformateur auxiliaire (17) et d'isolateurs (19) à l'au moins un onduleur à commutation de charge (8).

9. Ensemble turbogénérateur (1) selon l'une des revendications précédentes, dans lequel la machine électrique synchrone (20) est entraînée par une turbine à vapeur (25) et la turbine (3) entraînant le turbogénérateur (2) sont fournies en tant que système à arbres multiples.
